Europäisches Patentamt

European Patent Office

Office européen des brevets

(11) Publication number: 0 472 738 A1

# EUROPEAN PATENT APPLICATION
## published in accordance with Art. 158(3) EPC

(21) Application number: 91905526.9

(22) Date of filing: 07.03.91

(86) International application number:
PCT/JP91/00312

(87) International publication number:
WO 91/13729 (19.09.91 91/22)

(51) Int. Cl.5: B25J 15/06

(30) Priority: 16.03.90 JP 27498/90 U

(43) Date of publication of application:
04.03.92 Bulletin 92/10

(84) Designated Contracting States:
DE FR GB IT SE

(71) Applicant: NAGOYA OILCHEMICAL CO., LTD.
213-5 Honowari, Minamishibata-cho
Tokai-shi, Aichi476(JP)

(72) Inventor: HORIKI, Seinosuke, Nagoya

Oilchemical Co., Ltd.
213-5, Honowari, Minamishibata-cho
Tokai-shi, Aichi 476(JP)
Inventor: MAKINO, Reiji, Nagoya Oilchemical
Co., Ltd.
213-5, Honowari
Minamishibata-cho, Tokai-shi, Aichi 476(JP)

(74) Representative: Senior, Alan Murray et al
J.A. KEMP & CO 14 South Square Gray's Inn
London WC1R 5EU(GB)

(54) SUCKING DISC.

(57) This invention aims at smoothing automatic fixing and removal of a masking material which protects a pertinent area of an object for surface treatment. In fixing and removing the masking material, vacuum means is connected to an air pipe connected to an air guide port of a sucking disc so as to evacuate the disc for sucking the masking material, in which the peripheral part of the air guide port is reinforced with a reinforcing material for preventing deformation of the disc and clogging of the disc by sucking the surface-treated film to the air pipe and removing the film.

Fig. 1

FIELD OF THE INVENTION

The present invention relates to a sucker, for instance, used to attach/remove a masking member to/from a masking part.

DESCRIPTION OF THE PRIOR ART

The inventors of the present invention provided formerly a method to attach/remove a masking member to/from a masking part by using a sucker (Japanese Patent Application SN. 1-291961).

Said method consists of vacuum-sucking the masking member by said sucker connected to a ventilation tube and separating said masking member from said sucker by allowing air into said ventilation tube.

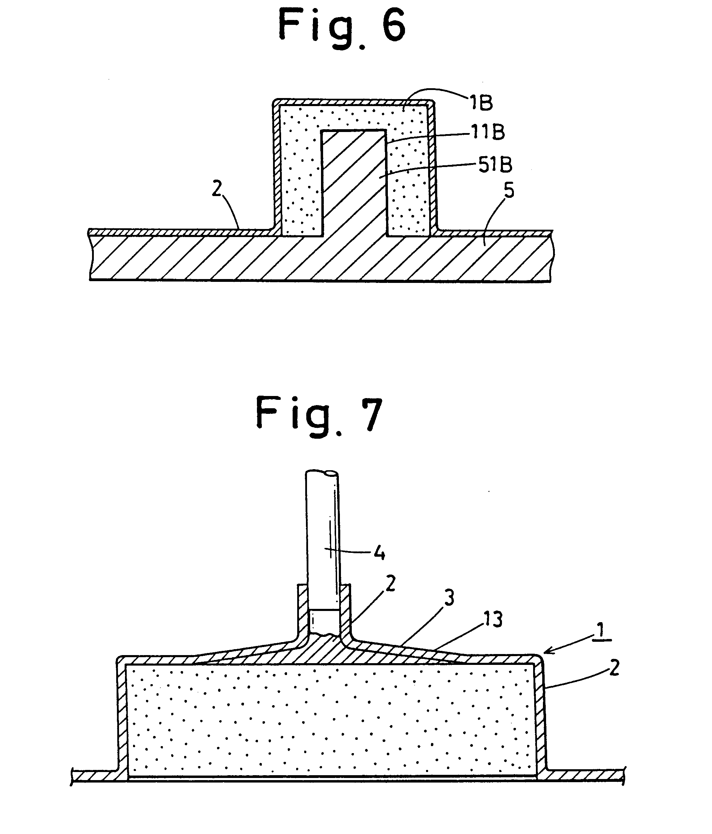

Nevertheless, for instance, as shown in Fig. 7, in a case where a coating film (2) having fluidity such as polyvinyl-chloride sol sticks to the surface of said masking member (1), said sucker (3) may deform to adhere closely to the sucked surface of said masking member (1) when said masking member is vacuum-sucked by said sucker (3) through said ventilation tube (4), and said coating film (2) may clog said sucker (3) to abstruct sucking at the masking member (1) by said sucker (3).

The above mentioned problem may cause extensive trouble in automatic attaching/removing of the masking member by the sucker.

DISCLOSURE OF THE INVENTION

The present invention provides a sucker (3) consisting of a bell body (31) made of an elastic material having a ventilation opening (32) connected to a ventilation tube (4) wherein a reinforcing part (35) having guide grooves (34) are formed around said ventilation opening (32) as a means of solving said prior problem.

Said sucker (3) may suck a member (1) to be sucked by connecting said ventilation tube (4) to said ventilation opening (32). In this case, the circumference of said ventilation opening (32) of said bell body (31) does not deform to adhere to the sucked surface of said member (1) since said circumference of said ventilation opening (32) of said bell body (31) is reinforced by said reinforcing part (35). Accordingly, said fluid coating layer (2) sticking to the sucked surface of said member is smoothly sucked into said ventilation tube (4) through said guide grooves (34) of said reinforcing part (35) and said ventilation opening (32).

As a result, in the present invention, if a fluid coating layer sticks to the sucked surface of a member to be sucked, said coating layer may not clog said sucker when said member is sucked by said sucker, so that sucking of said member by said sucker may be smoothly performed without any obstruction and therefore, said sucker of the present invention is very useful for such as the automatical attaching/removing of a masking member.

BRIEF DESCRIPTION OF THE DRAWINGS

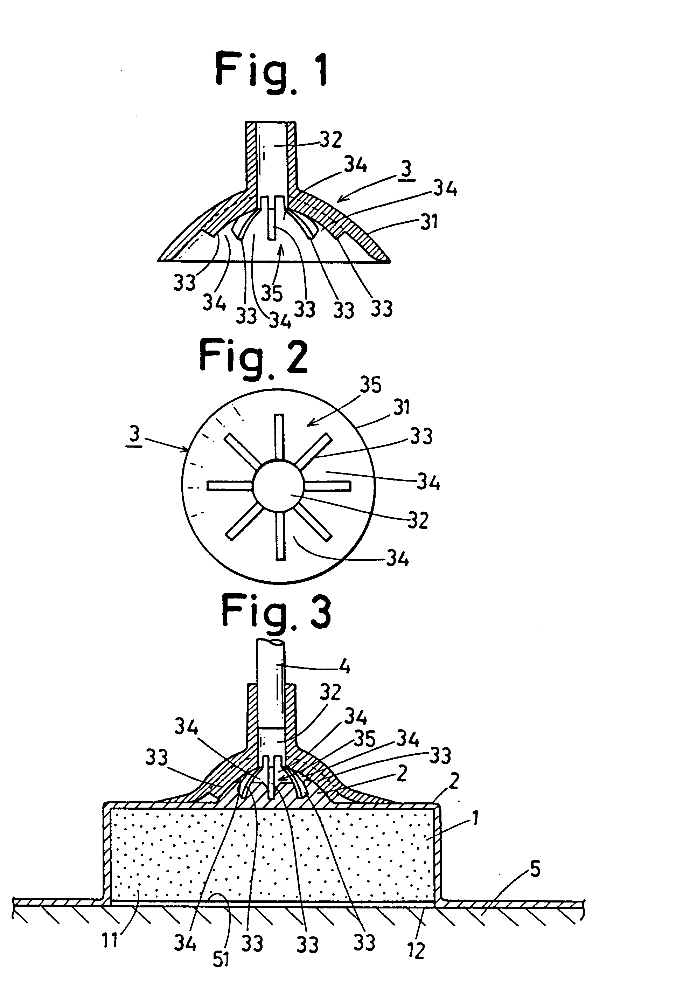

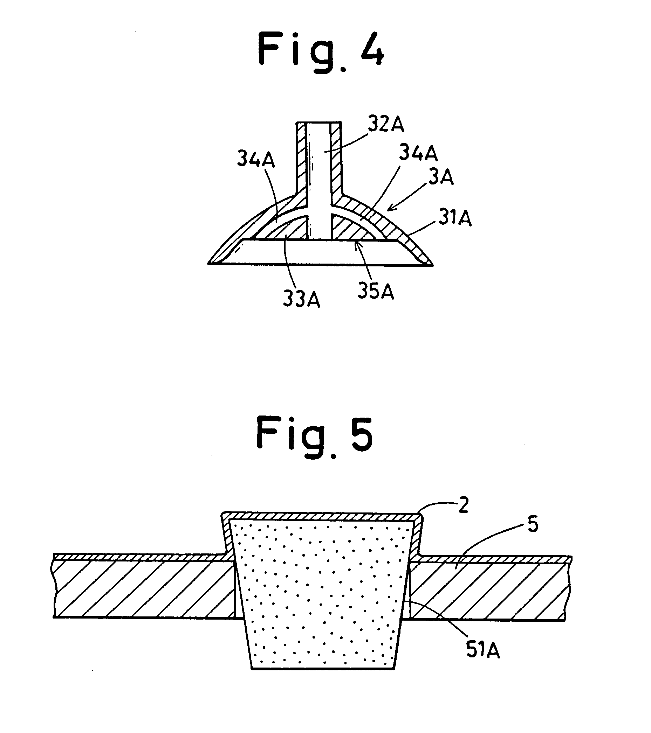

Figs. 1 to 3 relate to an embodiment of the present invention and Fig. 1 is a side sectional view, Fig. 2 is a bottom view, and Fig. 3 is a side sectional view in a case where the masking member is sucked by the sucker, Fig. 4 is a side sectional view of another embodiment, Fig. 5 is a side sectional view in a case where another type of the masking member is inserted into a hole, Fig. 6 is a side sectional view in a case where a projection is still covered with another type of the masking member, Fig. 7 is a side sectional view in a case where the masking member is removed by the prior sucker.

In the DRAWINGS:

| (3), (3)A | Sucker |
| (31), (31 )A | Bell body |
| (32), (32)A | Ventilation opening |
| (34), (34)A | Guide groove |
| (35), (35)A | Reinforcing part |
| (4) | Ventilation tube |

DESCRIPTION OF THE INVENTION

The present invention is described referring to Figs. 1 to 3 and a sucker (3) consists of a bell body (31), a ventilation opening (32) arranged in the center of said bell body (31) and a reinforcing part (35) consisting of a plural number of ribs (33) formed radially from said ventilation opening (32) toward the circumference of said bell body (31), and a plural number of grooves (34) formed between said ribs (33).

Said bell body (31) is made of an elastic material such as a rubber, a plastic and the like.

Said sucker (3) is connected to the end of a ventilation tube (4) through said ventilation opening (32) as shown in Fig. 3, and a masking member (1) consisting of a body (11) made of a plastic foam such as polystyrene foam, polyethylene foam, polypropylene foam, polyurethan foam and the like, and an adhesive layer (12) is attached to a masking part (51) of an article (5) and then a surface covering material such as polyvinyl chloride sol, tar-urethane, and the like is coated to form a coating film (2) on the surface of said article (5). As said masking part (51) of said article (5) is protected by said masking member (1), said coating film (2) is not formed on said masking part (51), but said coating film (2) sticks to the upper surface of said masking member (1).

Said ventilation tube (4) connects with a vacuum means such as a vacuum pump and the like to form a vacuum in said sucker (3) and said sucker (3) is attached to the upper surface of said masking member (1) after coating of said article (5) to suck said masking member (1) by said sucker (3). In this case, the deformation of said bell body (31) is prevented by the reinforcing effect of said ribs (33) of said reinforcing part (35), and said bell body (31) does not adhere to the sucked surface (13) of said masking member (1) as shown in Fig. 7. Accordingly, said coating film (2) sticking to said upper surface of said masking member (1) flows to be sucked into said ventilation tube (4) through said guide grooves (34) and said coating film (2) may not clog said sucker (3). Further, said coating layer (2) sucked into said ventilation tube (4) is collected in a trap (not shown in the Figures) intermediating in said ventilation tube (4).

Another embodiment is shown in Fig. 4. In said embodiment, a reinforcing part (35)A consisting of a thick part (33)A and a plural number of guide grooves (34)A formed radially in said thick part (33)A is formed around a ventilation opening (32)A of a bell body (31)A of a sucker (3)A.

The masking member to which said sucker (3) of the present invention is applied may be such as a plug-type masking member (1)A to mask a hole (51)A of an article (5) as shown in Fig. 5, a masking member (1)B having an inserting hole (11)B to mask a projection (51)B of an article (5) as shown in Fig. 6 and the like and further the sucker of the present invention may be used to suck various kinds of other members besides the masking member. Further, to operate the sucker of the present invention, it is preferable to use a robot.

## Claims

1. A sucker is consisting of a bell body made of an elastic material having a ventilation opening in the center thereof connecting with a ventilation tube wherin a reinforcing part having guide grooves is formed around said ventilation opening.

# Fig. 1

32
34
3
34
31
33
34 33 34 33 33 33
35

# Fig. 2

35
31
33
3
34
32
34

# Fig. 3

4
32
34
34
34
35
34
33
33
2
2
1
5
33
11 34 33 33 33 12
51

EP 0 472 738 A1

# Fig. 4

34A · 32A · 34A · 3A · 31A · 33A · 35A

# Fig. 5

2 · 5 · 51A

5

# Fig. 6

# Fig. 7

# INTERNATIONAL SEARCH REPORT

International Application No PCT/JP91/00312

## I. CLASSIFICATION OF SUBJECT MATTER (if several classification symbols apply, indicate all) [6]

According to International Patent Classification (IPC) or to both National Classification and IPC

Int. Cl[5] B25J15/06

## II. FIELDS SEARCHED

### Minimum Documentation Searched [7]

| Classification System | Classification Symbols |
|---|---|
| IPC | B25J15/06 |

Documentation Searched other than Minimum Documentation
to the Extent that such Documents are Included in the Fields Searched [8]

| | |
|---|---|
| Jitsuyo Shinan Koho | 1926 - 1991 |
| Kokai Jitsuyo Shinan Koho | 1971 - 1991 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, Y, 45-8742 (Kokichi Morimoto), April 24, 1970 (24. 04. 70), (Family: none) | 1 |
| Y | JP, U, 50-18879 (Aida Engineering K.K.), March 3, 1975 (03. 03. 75), (Family: none) | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| May 27, 1991 (27. 05. 91) | June 10, 1991 (10. 06. 91) |

| International Searching Authority | Signature of Authorized Officer |
|---|---|
| Japanese Patent Office | |

Form PCT/ISA/210 (second sheet) (January 1985)